# EUROPÄISCHE PATENTSCHRIFT

(11) **EP 0 342 387 B1**
(45) Veröffentlichungstag und Bekanntmachung des Hinweises auf die Patenterteilung: **10.02.1993**
(21) Anmeldenummer: 89107304.1
(22) Anmeldetag: 22.04.1989
(51) Int. Cl.: F16L 3/20

(54) **Aufhängevorrichtung für sich verschiebende Lasten, insbesondere Rohrleitungen und dergleichen**
Support device for moving loads, in particular pipes and the like
Dispositif de suspension pour charges mobiles, notamment pour canalisations et d'objets similaires

(30) Priorität: 17.05.1988 DE 3816673
(43) Veröffentlichungstag der Anmeldung: 23.11.1989
(73) Patentinhaber: LISEGA GMBH, D-27404 Zeven (DE)
(72) Erfinder: Hardtke, Hans Herlof, D-2730 Zeven (DE)
(74) Vertreter: Lippert, Hans-Joachim, Dipl.-Ing.

(56) Entgegenhaltungen:
- EP-A- 0 188 654
- DE-C- 863 734
- US-A- 3 112 909

## Beschreibung

Die Erfindung bezieht sich auf eine Aufhängevorrichtung für sich verschiebende Lasten, insbesondere Rohrleitungen und dergleichen und einer konstant bleibenden Zugkraft, bei der zur Aufrechterhaltung einer im wesentlichen gleichbleibenden Trag- oder Stützkraft ein Gleichgewicht zwischen einem festen Körper und dergleichen und der sich verschiebenden Last einstellbar ist und bei der ein Regel- und Steuerungsaggregat bei Einhaltung des Gleichgewichts auf den Anfangswert vorgesehen ist, wobei zu dem einstellbaren Glied eine Federvorrichtung zugordnet werden kann (Konstanthänger).

Bei den Konstanthängern als bewegungsausgleichende Halterungen bei warmgehenden Rohrleitungen übernehmen die mechanisch wirkenden Bauteile die Rohrleitungslasten und folgen dabei den wärmedehnungsbedingten Bewegungen der Rohrleitungen fast widerstandsfrei. Hierbei steht das Rohrleitungsgewicht mit der Einstellast der Konstanthänger annähernd in Gleichgewicht. Die Summe vorhandener Abweichungen und die dadurch verursachten Zusatzbeanspruchungen im Rohrleitungssystem bleiben überwiegend im zulässigen Bereich.

Es kann jedoch nicht ausgeschlossen werden, daß auf Grund äußerer Einflüsse oder direkt aus dem Konstanthängerverhalten heraus die Rohrleitungen oder andere Komponenten sich nicht immer so bewegen, wie es erwartet wird, wobei die gewünschten Bewegungen von Kaltstellung zur Warmstellung oder umgekehrt nicht erreicht werden. Die Summe der eintretenden Abweichungen kann in bestimmten Fällen ein zusätzliches Maß überschreiten und in Form von zusätzlichen Sekundärspannungen die Lebensdauer der Rohrleitungen bzw. deren Anschlüsse im Zeitstandsbereich erheblich mindern.

Abweichungen können auftreten beispielsweise durch nicht immer ideal erfaßbare Einflüsse in der Rohrstatik, praktische Abweichungen zu der theoretisch vorgenommenen Belastungsverteilung, Wanddickentoleranzen der Rohre, wenn diese nicht extra gewogen und die Gewichtsdifferenzen berücksichtigt werden, nicht exakt im Vorwege erfaßbare Dämmgewichte, mechanische Reibung und Fertigungstoleranzen bei der Hängevorrichtung und auch durch Ermüdung der Federn bei Konstanthängern. Besonders ungünstig wirken sich kumulative Abweichungen in langschenkligen, sogenannten weichen Rohrleitungssystemen aus. Verschiebungen des vertikalen Stranges können hierbei im Dehnungsschenkel bereits bei verhältnismäßig geringen Abweichungen teilweise oder vollständig behindert werden. Zu den genannten Schäden können ferner gefährliche Wasserschläge, z.B. durch falsches Gefälle, hinzukommen.

So ist es möglich, daß die gewünschten Bewegungen der Rohrleitung von Kaltstellung zu Warmstellung oder umgekehrt nicht erreicht werden, was bei bestimmten Unterstützungspunkten auch nicht mehr toleriert werden kann.

Durch die DE-C 863734 ist es bekannt, bei einer Trag- oder Stützvorrichtung zur Aufrechterhaltung einer im wesentlichen gleichbleibenden Trag- oder Stützkraft an einem einer Bewegung unterliegenden Gegenstand, eine auf Kraft ansprechende, auf das Gleichgewicht wirkende und durch eine Abweichung der Trag- oder Stützkraft von dem anfangs vorbestimmten Wert betätigte Regel- oder Schalteinrichtung zum Zurückführen der Trag- oder Stützkraft auf im wesentlichen ihren Anfangswert vorzusehen. Dabei ist es erwünscht, daß das einstellbare Glied mindestens von einem Teil des Gewichts der Last entlastet wird, wobei zu dem einstellbaren Glied eine Feder oder Federvorrichtung parallel geschaltet wird. Die Feder soll in diesem Fall zu dem einstellbaren Glied parallel und mit der Last über das auf Kraft ansprechende Glied verbunden sein. Die Vorrichtung zum Halten des Gleichgewichtes ist dabei verhältnismäßig umständlich und aufwendig ausgebildet. Die Vorrichtung zum Eintarieren des Gleichgewichtes befindet sich oberhalb des Zylinders, in dem sich die Feder befindet. Man arbeitet hierbei mit einer von einem Elektromotor angetriebenen Spindel mit Motor. Der Motor selbst ist an dem festen Anker, z.B. dem Träger, verankert. Hinzu kommt als besonders bauliches Teil ein Zylinder mit einem Kolben und einem Verbindungsrohr. Diese Teile sind in Hintereinanderfolge als selbständige Teile vorgesehen. Diese baulichen Maßnahmen sind außerhalb der eigentlichen Aufhängevorrichtung angeordnet, wodurch zusätzlich Platz beansprucht wird, zudem sind die außenliegenden Teile äußeren Beeinträchtigungen ausgesetzt.

Die Erfindung bezieht sich speziell auf eine Aufhängevorichtung für sich verschiebende Lasten, insbesondere Rohrleitungen und dergleichen nach der EP-A 0188 654, nämlich auf eine Aufhängevorrichtung mit einer konstant bleibenden Zugkraft, wobei zu der zwischen dem Aufhängeteil und dem Last tragenden Teil angeordneten, die Last aufnehmenden Federung eine Zusatzfederung zur Kompensation der sich ändernden Schub- und Druckkraft der Hauptfederung vorgesehen ist. Die Zusatzfederung wirkt hierbei als Druckfederung über eine Rolle mit einem Kurventeil zusammen. In dem mit der Zusatzfederung zusammenarbeitenden Lastrohr ist erfindungsgemäß die weitere Federvorrichtung als Servo- Hydraulik des Lasttrageteils untergebracht, deren Zylinder an der Halterung des Gehäuses der Vorrichtung angelenkt ist und deren Kolbenstange an dem Lastrohr befestigt ist.

Dabei ist die Anordnung so getroffen, daß der Zylinder der Servo-Hydraulik durch Hydraulikleitungen auf beiden Seiten des Kolbens mit einem Hydrauliksteuerungsaggregat verbunden ist. Das Hydrauliksteuerungsaggregat steht durch Steuerleitungen mit der Regelungsvorrichtung in Verbindung.

Bei einer solchen Ausbildung ist die hydraulische Hilfseinrichtung in der sonstigen Gestaltung und Konfiguration vollständig integriert untergebracht. Man kann jederzeit eine Umrüstung der bekannten Aufhängevorrichtung vornehmen, ohne daß an der bekannten Vorrichtung etwas zu ändern ist. Die äußeren Abmessungen der Aufhängevorrichtung können beibehalten werden und es entsteht kein größerer Platzbedarf. Außerhalb des Gehäuses befindliche Bauteile sind nicht vorhanden. Der Platzbedarf für die Zusatzeinrichtung ist äußerst gering bzw. es wird ein bereits vorhandener Platz günstig und hochwirksam ausgenutzt. Eine Störanfälligkeit ist außerdem sehr gering.

Das Servo-Hydraulik-Aggregat gemäß der Erfindung hat mit einer Gewichtsentlastung nichts zu tun, vielmehr hat die Servo-Hydraulik bei der Erfindung die Funktion, die passiv reagierende Aufhängevorrichtung dahingehend zu verbessern, die Reaktionskraft der Aufhängevorrichtung durch die aktiv wirkende Vorrichtung in der Weise zu ergänzen, daß die Lastdifferenzen kontrolliert ausgeglichen werden. Dies geschieht auf baulich einfache Weise.

Zweckmäßig ist eine Regelvorrichtung für die Servo-Hydraulik vorgesehen, die bei Abweichung von der Konstanthängerstellung, die der von dem Konstanthänger aufzunehmenden Last entspricht, von dem Soll-Wert die Servo-Hydraulik zuschaltet und bei Erreichen des Soll-Wertes das Servo-Hydraulikaggregat abschaltet. Dadurch stellt die Servo-Einrichtung lediglich eine Korrekturvorrichtung dar, die die richtige Funktion des Konstanthängers überwacht und nur dann eingreift, wenn der Konstanthänger durch irgendwelche Störquellen gehindert ist, die vorher berechnete richtige Position, für die der Konstanthänger ausgelegt ist, anfahren zu können.

Zur Feststellung der Ist-Position des Konstanthängers kann der Meßwertaufnehmer mit einem an dem Lastrohr angebrachten Teil zusammenwirken. Der andere Meßwertaufnehmer kann an dem durch den Konstanthänger abzutragenden Teil angebracht sein und z.B. aus einem Temperaturfühler bestehen. Die Werte der Meßwertaufnehmer werden miteinander verglichen, worauf das Servo-Hydraulikaggregat entsprechend in Tätigkeit gesetzt wird.

Die Erfindung wird anhand eines in der Zeichnung dargestellten Ausführungsbeispiels nachstehend erläutert.

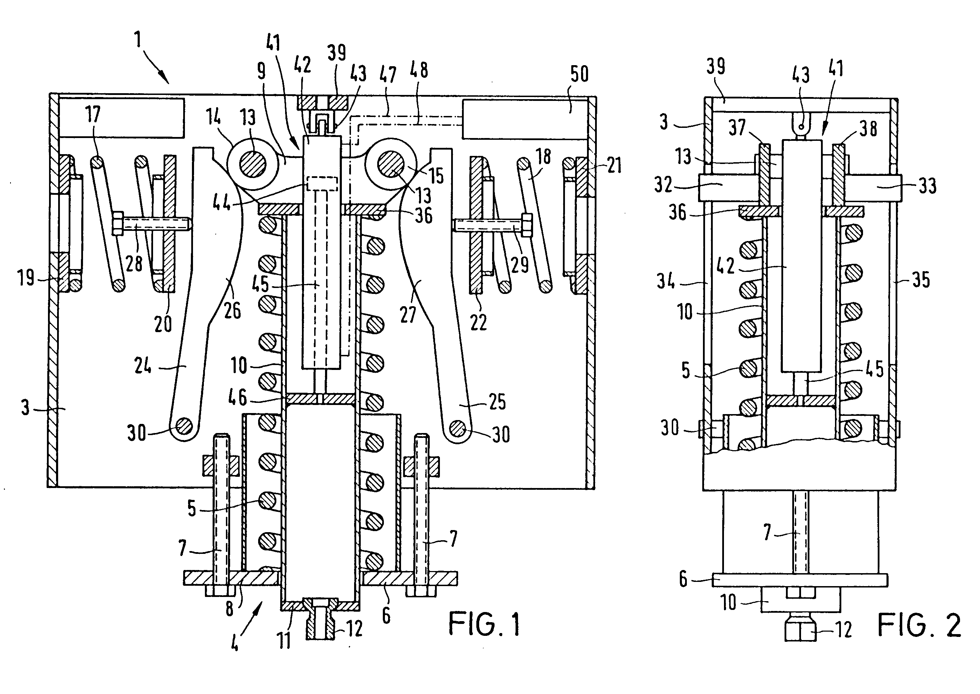

Fig. 1 zeigt eine Ausführungsform der Aufhängevorrichtung gemäß der Erfindung als Konstanthänger mit Servo-Hydraulikaggregat im Längsschnitt und im Schema.

Fig. 2 stellt eine Seitenansicht - zum Teil im Schnitt - des Konstanthängers der Figur 1 schematisch dar.

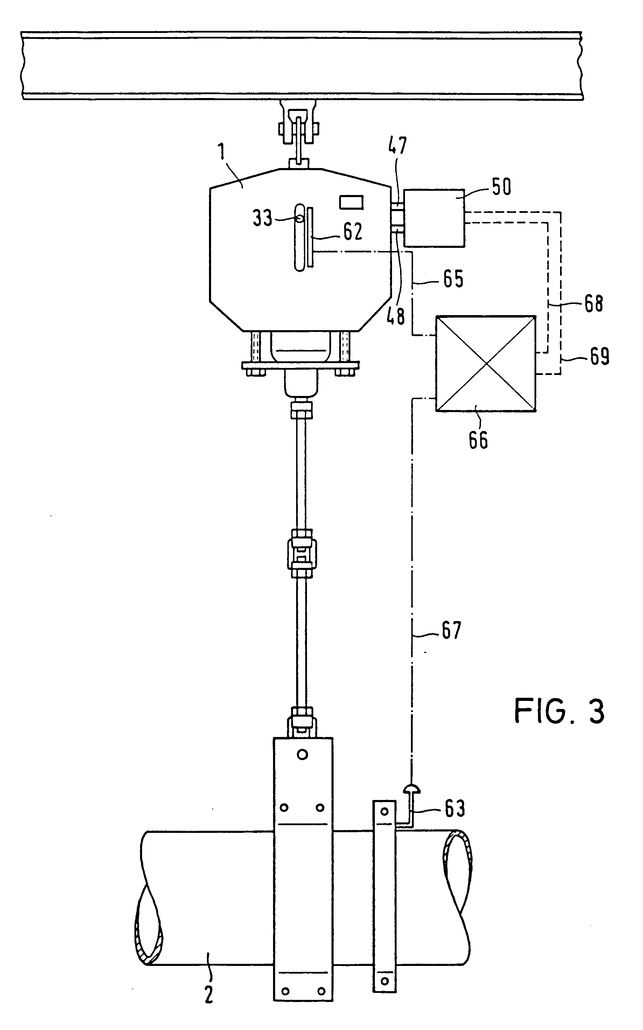

Fig. 3 zeigt im Schema die Gesamtanordnung des Konstanthängers mit Servo-Hydraulik und Meßwertaufnehmer in Ansicht.

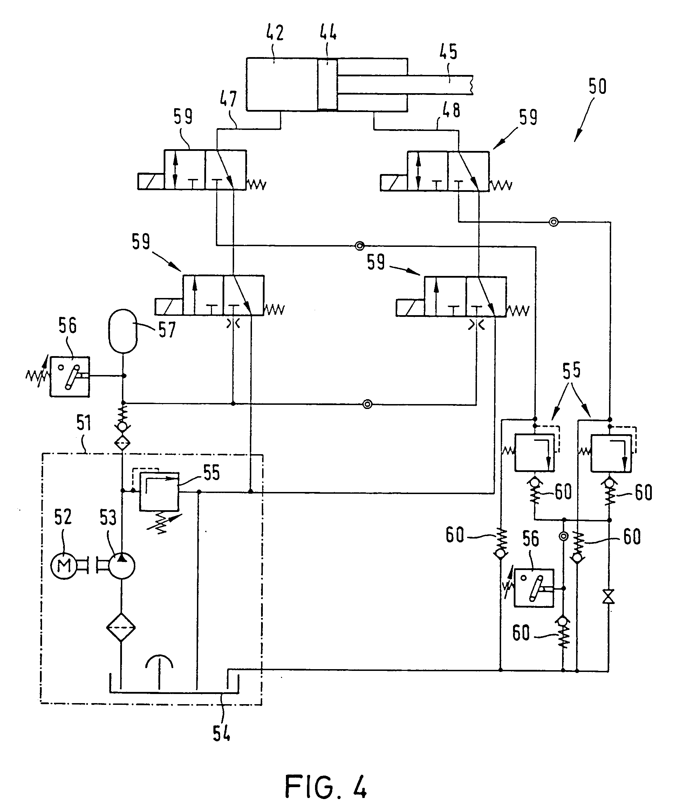

Fig. 4 veranschaulicht die Hydraulikanlage im Diagramm schematisch.

Die Aufhängevorrichtung 1 als Konstanthänger für sich verschiebende Lasten, wie Rohrleitungen 2 u.dgl., weist ein Gehäuse 3 als Aufhängeteil auf, in dem ein Lasttrageteil 4 vorgesehen ist, das unter der Wirkung eines die Last aufnehmenden Hauptfederung 5 steht. Diese stützt sich gegen ein unteres Widerlager 6 ab, das mittels Schraubbolzen 7 zur unteren Quertraverse 8 des Gehäuses 3 verstellbar angeordnet ist. Mit ihrem anderen Ende stützt sich die Hauptfederung 5 an einem Kopfstück 9 ab, das als Widerlager dient, an dem eine Hülse 10 befestigt ist, die über das untere Widerlager 6 vorsteht. Die Hülse 10 als Lastrohr ist durch eine Platte 11 geschlossen, in der ein Pendelteil 12 zur Aufnahme der zu tragenden Last, z.B. einer Halterung, einer Rohrleitung u.dgl., gelagert ist. Das Kopfstück 9 trägt an beiden Seiten auf den Achsen 13 vorstehend gelagerte Rollen 14 und 15.

Die Zusatzfederungen 17 und 18 zur Kompensation einer aus einer Mittelstellung sich ändernden Zug- und Druckkraft der Hauptfederung 5 für die Konstanthaltung der Haltekraft bestehen aus Druckfedern, die zwischen den Widerlagern 19 und 20 einerseits und 21 und 22 andererseits angeordnet sind und in Querrichtung zu der Hauptachse der Hauptfederung 5 verlaufen. Zwischen der Hauptfederung 5 bzw. dem Kopfstück 9 mit den Rollen 14 und 15 und den Zusatzfederungen 17 und 18 sind Schwenkhebel 24 und 25 angeordnet, die als Kurvenarme ausgebildet sind und unmittelbar Kurventeile 26 und 27 aufweisen, die mit den Rollen 14 und 15 des Kopfstückes 9 der Hauptfederung 5 zusammenwirken. Die Schwenkhebel 24, 25 übernehmen hierbei zugleich die Funktion von Kurvenscheiben und stehen unter der Wirkung der Zusatzfederung 17 und 18. Die Schwenkhebel als Kurvenarme können stehend oder hängend gelagert sein. In der Nullstellung befinden sich die Zusatzfeder und die Kurventeile zweckmäßig im oberen bzw. in dem mittleren Bereich der Hauptfederung 5. Mit 28 und 29 sind Justierelemente bezeichnet, die vorteilhaft als Stellschrauben ausgebildet sind. Die Schwenkhebel 24, 25 sind auf Achsen 30 gelagert, die von den Seitenwänden des Gehäuses 3 gehalten werden.

Das Kopfstück 9 mit dem Lastrohr 10 ist mittels der Querbolzen 32, 33 in den Längsschlitzen 34 und 35 geführt. Hierzu ist die obere Widerlagerplatte 36 mit aufstehenden Plattenteilen 37, 38 versehen, an denen die Führungsbolzen 32, 33 befestigt sind. Mit 39 ist eine Halterung zum Anbringen des Konstanthängers bzw. des Gehäuses 3 an einem ortsfesten Gestell od.dgl. bezeichnet.

Eine hydraulisch arbeitende Hilfseinrichtung 41 (Servo-Aggregat) ist in dem Konstanthänger integriert angeordnet. Sie ist dazu bestimmt, eine Zusatzkraft von einer vorbestimmten Größe in beiden Bewegungsrichtungen zu der Hauptkraft zu bewirken. Das Servo-Hydraulikaggregat 41 weist einen Zylinder 42 auf, der mit der Halterung 39 durch ein Gelenk 43 verbunden ist. In dem Zylinder 42 befindet sich ein Kolben 44 mit einer Kolbenstange 45, die mit einer dem Lastrohr 10 angeordneten Querwand 46 fest verbunden ist. Zu beiden Seiten des Kolbens 44 führen Hydraulikleitungen 47 und 48 zu einem Hydrauliksteuerungsaggregat 50.

Das Hydraulik-Steuerungsaggregat 50 weist eine Druckerzeugungs-Vorrichtung 51 auf, Motor 52, Pumpe 53, Tank 54, Druckbegrenzungsventil 55, Druckschalter 56 und Druckspeicher 57. Zwischen der Servo-Hydraulik 41 und der Druckerzeugungsvorrichtung 51 bis 57 sind vier Dreiwegeventile 59 angeordnet, je zwei in den Leitungen 47 und 48. In den Leitungen sind ferner noch Druckbegrenzungsventile 59 und eine Anzahl von Rückschlagventilen 60 vorgesehen.

Für das Servo-Hydraulikaggregat ist zur Feststellung der Ist-Position des Konstanthängers ein Meßwertaufnehmer 62 an der Außenseite des Gehäuses 3 des Konstanthängers 1 angeordnet, der mit einem an dem Lastrohr 10 angebrachten Teil zusammenwirkt. Vorteilhaft wird hierzu ein Führungsbolzen 32 oder 33 verwendet, der die Bewegungen des Lastrohrer 10 nach außen anzeigt. Dieser Meßwertaufnehmer ist ein Wegeaufnehmer. Ein weiterer Meßwertaufnehmer 63 ist an dem zwischen dem Konstanthänger abzutragenden Teil, z.B. der Rohrleitung 2, angebracht. Er besteht vorteilhaft aus einem Temperaturfühler. Mit dem Temperatur-Meßwertgeber wird die Temperatur der Rohrleitung gemessen. Diese Temperatur ist das Maß für den Soll-Wert bei der Warm-/Kaltbewegung des Konstanthängers. Für den Einsatz des Servo-Hydraulikaggregates kann ein ständiger Vergleich zwischen Soll- und Ist-Wert auf verschiedene Art durchgeführt werden, z.B. mittels mechanischer Mittel, oder auch auf elektrische oder elektronische Weise, welch letztere Maßnahme vorzuziehen ist.

Von dem Meßwertaufnehmer 62 für die Feststellung der Weg-Position des Konstanthängers führt eine Steuerleitung 65 zu einer Regelungsvorrichtung 66 und von dem Meßwertaufnehmer 63, z.B. einem Widerstandsthermometer, führt eine Steuerleitung 67 ebenfalls zu der Regelungsvorrichtung 66, die elektronisch arbeitet oder als Prozeßrechner ausgebildet ist. Von der Regelungsvorrichtung 66 führen Steuerleitungen 68 und 69 zu dem Hydraulikaggregat 50, durch den die Zusatzkraft erzeugt und mittels der Kolbenzylindereinheit auf das Lastrohr des Konstanthängers übertragen wird.

Die Hydraulik ist so ausgelegt, daß mindestens 10 %, besser jedoch eine Zusatzkraft in beiden Richtungen bis zu 50 % der Nennlast des Konstanthängers aufgebracht werden können. Mittels des Meßwertaufnehmers 63, der an der Außenwand der abzutragenden Komponente, z.B. der Rohrleitung, angebracht ist, wird die Temperatur gemessen. Dieser Wert wird mittels der Regelungsvorrichtung in die erforderliche Wegposition des Konstanthängers umgewandelt. Diese Position stellt die Soll-Position der Kolbenstangenstellung dar. Der andere Meßwertaufnehmer 62, der direkt die Position am Konstanthänger abgreift, stellt die Ist-Position des Konstanthängers dar. Bei einer Differenz zwischen Soll- und Ist-Wert wird das Hydraulikaggregat eingeschaltet und durch entsprechende Steuerung der Magnetventile 59 (Auf-bzw. Abwärtsbewegung der Kolbenstange) in die Soll-Position gebracht. Die Servo-Hydraulik wird nur dann in Tätigkeit gesetzt, wenn eine Differenz zwischen der Ist-und Soll-Position des Konstanthängers mittels der Meßwertaufnehmer festgestellt wird. Zwischen Soll-Wert auf Grund der gemessenen Temperatur und Ist-Wert auf Grund des gemessenen Weges am Hänger wird ständig ein Vergleich durchgeführt, zweckmäßig auf elektronische Weise. Wenn eine Differenz zwischen Soll- und Ist-Wert besteht, wird das an dem Konstanthänger angebrachte Hydraulikaggregrat geschaltet und über die Magnetventile wird der im Lastrohr des Konstanthängers eingebaute Hydraulikzylinder angesteuert. Durch Betätigung des Hydraulikzylinders wird der Konstanthänger so eingestellt, daß der Soll- und Ist-Wert auf gleichem Niveau bzw. nahezu gleichem Niveau steht. Anschließend wird das Hydraulikaggregat abgeschaltet und der Druck im Hydraulikzylinder abgebaut, so daß die Last wiederum ausschließlich vom Konstanthänger abgetragen wird. Die Regelung erfolgt zweckmäßig so lange, bis der angestrebte Ausgleich einen Wert annimmt, der in einem einstellbaren Toleranzbereich liegt. Für den Fall, daß der Regelvorgang in einer bestimmten Zeit, z.B. 2 Minuten, nicht erfolgreich ausgeführt werden kann, ist der Regelvorgang abzubrechen und ein Alarmsignal auszulösen.

## Patentansprüche

1. Aufhängevorrichtung (1) für sich verschiebende Lasten, insbesondere Rohrleitungen (2) und dgl. und einer konstant bleibenden Zugkraft, bei der zur Aufrechterhaltung einer wesentlichen gleichbleibenden Trag- oder Stützkraft ein Gleichgewicht zwischen einem festen Träger und dgl. (3) und der sich verschiebenden Last (4) einstellbar ist und bei der ein Regel- und Steuerungsaggregat (41, 50) bei Einhaltung des Gleichgewichts auf den Anfangswert vorgesehen ist, wobei zu dem einstellbaren Glied eine Federvorrichtung zugeordnet ist, **dadurch gekennzeichnet,** daß bei einer Aufhängevorrichtung (1), bei der mit einer zwischen dem Aufhängeteil (3) und dem Lasttrageteil (4) angeordneten, die Last aufnehmenden Federung (5) eine Zusatzfederung (17, 18) zur Kompensation der sich ändernden Zug- und Druckkraft der Hauptfederung (5) vorgesehen ist und als Druckfederung über eine Rolle (14, 15) mit einem Kurventeil (26, 27) zusammenwirkt, in dem mit der Zusatzfederung (17, 18) zusammenarbeitenden Lastrohr (10) die weitere Federvorrichtung als Servo-Hydraulik (41) des Lasttrageteils (4a) untergebracht ist, deren Zylinder (42) an der Halterung (39) des Gehäuses (3) der Vorrichtung angelenkt ist (3) und deren Kolbenstange an dem Lastrohr (10) befestigt ist.

2. Aufhängevorrichtung nach Anspruch 1, **dadurch gekennzeichnet,** daß der Zylinder (42) der Servo-Hydraulik (41) durch Hydraulikleitungen (47, 48) zu beiden Seiten des Kolbens (44) mit einem HydraulikSteuerungsaggregat (50) verbunden ist und daß das Hydraulik-Steuerungsaggregat (50) durch Steuerleitungen (68, 69) mit der Regelungsvorrichtung (66) in Verbindung steht.

## Claims

1. Suspension device (1) for moving loads, in particular pipelines (2) and the like and having a constant traction, in the case of which equilibrium between a fixed support and the like (3) and the moving load (4) can be adjusted in order to maintain a substantially constant support or carrying force, and in the case of which a regulating and control unit (41, 50) is provided whereby the equilibrium is maintained at the initial value, a spring device being associated with the adjustable member, characterised in that, in a suspension device (1), in which, in addition to a spring device (5) which is disposed between the suspended part (3) and the load supporting part (4) and accommodates the load, an additional spring device (17, 18) is provided for compensating the varying tension and pressure force of the main spring device (5) and cooperates, as a compression sprung device, via a roller (14, 15) with a cam part (26, 27), the further spring device, as the servo hydraulic system (41) of the load supporting part (4a), is accommodated in a load tube (10) cooperating with the additional spring device (17, 18), the cylinder (42) of which servo hydraulic system being articulated (3) on the mounting (39) of the device housing (3) and the piston rod of which being secured on the load tube (10).

2. Suspension device according to Claim 1, characterised in that the cylinder (42) of the servo hydraulic system (41) is connected by hydraulic lines (47, 48) on both sides of the piston (44) to a hydraulic control unit (50); and in that the hydraulic control unit (50) is connected by control lines (68, 69) to the regulating device (66).

## Revendications

1. Dispositif de suspension (1) exerçant une force de traction qui reste constante, pour des charges qui se déplacent, en particulier pour des canalisations (2) ou similaires, dans lequel un équilibre entre un support fixe ou similaire (3) et la charge mobile (4) est réglable afin de maintenir une force portante ou d'appui pratiquement constante, et dans lequel un groupe de réglage et de commande (41, 50) est prévu pour le maintien de l'équilibre à la valeur initiale, un dispositif à ressort étant associé à l'organe réglable, caractérisé en ce que, dans le cas d'un dispositif de suspension (1) dans lequel, en association avec un système à ressort (5) qui absorbe la charge et qui est disposé entre la partie de suspension (3) et la partie (4) portant la charge, un système à ressort supplémentaire (17, 18) est prévu pour compenser la force de traction et de compression variable du système à ressort principal (5) et coopère avec lui, en tant que ressort de compression, par l'intermédiaire d'un galet (14, 15) et d'un élément à came (26, 27), un autre dispositif à ressort est logé dans le tube de charge (10) qui coopère avec le système à ressort supplémentaire (17, 18), cet autre dispositif se présentant sous forme de servo-commande hydraulique (41) de la partie (4) portant la charge, dont le cylindre (42) est articulé (en 43) sur l'élément de fixation (39) du boîtier (3) du dispositif et dont la tige de piston est fixée au tube de charge (10).

2. Dispositif de suspension selon la revendication 1, caractérisé en ce que le cylindre (42) de la servo-commande hydraulique (41) est raccordé à un groupe de commande hydraulique (50) par des conduites hydrauliques (47, 48) des deux côtés du piston (44), et en ce que le groupe de commande hydraulique (50) est relié au dispositif de réglage (66) par des lignes de commande (68, 69).
